Europäisches Patentamt

European Patent Office

Office européen des brevets

(19)

(11) Veröffentlichungsnummer: **0 070 993**
**B1**

(12) **EUROPÄISCHE PATENTSCHRIFT**

(45) Veröffentlichungstag der Patentschrift:
04.09.85

(51) Int. Cl.⁴: **H 04 M 11/04**

(21) Anmeldenummer: **82104578.8**

(22) Anmeldetag: **26.05.82**

(54) Verfahren zur Übermittlung von Notrufen von hilfebedürftigen Personen.

(30) Priorität: **23.07.81 DE 3129080**

(43) Veröffentlichungstag der Anmeldung:
**09.02.83 Patentblatt 83/6**

(45) Bekanntmachung des Hinweises auf die Patenterteilung:
**04.09.85 Patentblatt 85/36**

(84) Benannte Vertragsstaaten:
**AT BE CH DE FR GB LI LU NL SE**

(56) Entgegenhaltungen:
**EP - A - 0 021 425**
**CH - A - 415 760**
**DE - A - 2 632 899**
**DE - A - 2 903 459**
**DE - A - 3 003 935**
**NL - A - 7 709 333**
**US - A - 3 038 965**

(73) Patentinhaber: **ANT Nachrichtentechnik GmbH,
Gerberstrasse 33, D-7150 Backnang (DE)**

(72) Erfinder: **Budnik, Norbert, Ing.grad., Kantstrasse 23,
D-7150 Backnang (DE)**
Erfinder: **Lissner, Paul, Ing.grad., Ludwigsburger
Strasse 8, D-7150 Backnang (DE)**

(74) Vertreter: **Schickle, Gerhard, Dipl.-Ing. et al, ANT
Nachrichtentechnik GmbH Patent- und Lizenzabteilung
Gerberstrasse 33, D-7150 Backnang (DE)**

### Beschreibung

Die Erfindung betrifft ein Verfahren zur Übermittlung von Notrufen von hilfebedürftigen Personen nach dem Oberbegriff des Patentanspruches 1. Ein solches Verfahren ist aus der EP-A-0 021 425 bekannt. Dort wählt ein an eine Teilnehmerleitung eines Fernsprechwählvermittlungsnetzes angeschlossenes Notrufteilnehmergerät nach Betätigung eines Sensors durch die hilfebedürftige Person selbsttätig die Rufnummer einer ebenfalls an das Fernsprechwählvermittlungsnetz angeschlossenen Notrufzentrale. Über die so aufgebaute Verbindung findet ein bidirektionaler Datenaustausch durch Frequenzumtastung innerhalb des Sprachbandes statt, wobei auch eine Kennung des Notrufteilnehmergerätes übertragen wird. Durch ein Signal von der Notrufzentrale kann eine Wechselsprecheinrichtung im Notrufteilnehmergerät wirksam geschaltet werden, wobei die Sprechrichtung durch ein tonfrequentes Steuersignal umgeschaltet wird.

Dieses bekannte Verfahren hat den Nachteil, dass eine Bedienungshandlung am Notrufteilnehmergerät notwendig ist, um es nach erledigtem Notruf in den Ruhezustand zu versetzen und die Fernsprechverbindung auszulösen, d.h. zu trennen. Wenn die hilfebedürftige Person dazu nicht in der Lage ist, bleiben die betreffenden Leitungen und Wähler in Fernsprechwählvermittlungsnetz unnötig lange belegt, bis die hilfeleistende Person bei der hilfebedürftigen Person eintrifft und das Notrufteilnehmergerät in den Ruhezustand versetzt.

Ein weiterer Nachteil des bekannten Verfahrens ist sein grosser Aufwand, der seine Ursache in der Anwendung eines Frequenzumtastverfahrens für die Übertragung der Kennung und der Anwendung eines eigenen codierten Signals für das Wirksamschalten der Wechselsprecheinrichtung und der hierfür notwendigen Modulations- und Codierungsanordnung hat.

Aufgabe der Erfindung ist es, ein Verfahren der eingangs genannten Art anzugeben, bei dem der Aufwand für die Übertragung der Kennung, für das Wirksamschalten der Wechselsprecheinrichtung und für die Sprechrichtungsumschaltung geringer ist als bei dem bekannten Verfahren und bei dem ausserdem eine durch einen Notruf aufgebaute Fernsprechverbindung zum frühest möglichen Zeitpunkt ausgelöst werden kann, auch wenn sich keine zu einer Bedienungshandlung fähige Person beim Notrufteilnehmergerät befindet.

Diese Aufgabe wird durch ein Verfahren nach dem Patentanspruch 1 gelöst.

Das erfindungsgemässe Verfahren hat den Vorteil, dass allein durch eine Bedienungshandlung in der Notrufzentrale das Notrufteilnehmergerät in den Ruhezustand versetzt sowie die Fernsprechverbindung ausgelöst werden kann. Dadurch wird erreicht, dass die Leitungen und Wähler im Fernsprechwählvermittlungsnetz zum frühest möglichen Zeitpunkt frei werden und zur anderweitigen Benutzung zur Verfügung stehen.

Die Erfindung wird nachstehend erläutert, wobei zunächst das Verfahren nach dem Patentanspruch 1 behandelt wird.

In die Teilnehmerleitung von einer Fernsprechwählvermittlungsstelle zu einem Fernsprechteilnehmerapparat ist ein Notrufteilnehmergerät eingeschleift, das sich in der Wohnung einer alten, kranken oder anderweitig hilfebedürftigen Person befindet. An dieselbe oder eine andere Fernsprechwählvermittlungsstelle desselben Fernsprechwählvermittlungsnetzes ist ebenfalls über eine (oder mehrere) Teilnehmerleitungen eine Notrufzentrale angeschlossen.

Im Notfall betätigt die hilfebedürftige Person einen Sensor, z.B. eine Taste, am Notrufteilnehmergerät, das daraufhin die Teilnehmerleitung vom Fernsprechapparat abtrennt, auf der Teilnehmerleitung die Teilnehmerschleife schliesst und anschliessend die Rufnummer der Notrufzentrale wählt. In der Notrufzentrale wird nach Erkennen des vom Leitungswähler der Fernsprechvermittlungsstelle ausgesandten Rufstromes ebenfalls die Teilnehmerschleife geschlossen. Dadurch wird eine zur Übertragung von tronfrequenten Signalen zwischen dem Notrufteilnehmergerät und der Notrufzentrale geeignete Fernsprechverbindung hergestellt.

Das Notrufteilnehmergerät sendet anschliessend eine Kennung in der Form eines Tonfrequenz-Dauersignals aus, durch die es in der Notrufzentrale von den anderen, an dasselbe Fernsprechwählvermittlungsnetz angeschlossenen Notrufteilnehmergeräten unterschieden werden kann. Für jedes Notrufteilnehmergerät ist eine andere Tonfrequenz oder Tonfrequenzkombination vorgesehen.

Falls an einem Notrufteilnehmergerät mehrere Sensoren angeschlossen sind, kann für jeden Sensor eine eigene Frequenz oder Frequenzkombination vorgesehen sein.

Nach Erkennen der Kennung in der Notrufzentrale wird von ihr das erste Mal ein tonfrequentes Umschaltsteuersignal gesendet. Dieses bewirkt im Notrufteilnehmergerät die Beendigung der Aussendung der Kennung und das Wirksamschalten einer Wechselsprecheinrichtung, wobei während des Empfanges des Umschaltsteuersignals die Wechselsprecheinrichtung auf «Sprechen» geschaltet ist. Nach dem Ende dieses erstmals gesendeten Umschaltsteuersignals ist die Wechselsprecheinrichtung auf «Hören» geschaltet, die Aussendung der Kennung bleibt aber unterbunden. Über die Wechselsprecheinrichtung kann die Bedienungsperson in der Notrufzentrale mit der hilfebedürftigen Person sprechen, wobei beliebig oft durch Senden des Umschaltsteuersignals die Sprechrichtung gewechselt werden kann.

Ist die Bedienungsperson in der Notrufzentrale ausreichend informiert, so wird von der Notrufzentrale ein Auslösebefehl an das Notrufteilnehmergerät gesendet. Dadurch wird im Notrufteilnehmergerät die Teilnehmerschleife auf der Teilnehmerleitung geöffnet und das Notrufteilnehmergerät selbst in den Ruhezustand versetzt. Dies bewirkt die Auslösung der Verbindung im Fernsprechwählvermittlungsnetz. Auch in der Notrufzentrale wird die Teilnehmerschleife auf ihrer Teilnehmerleitung geöffnet.

Für die Übertragung des Auslösebefehls sind in den Unteransprüchen 2 bis 4 verschiedene zweckmässige Ausgestaltungen angegeben.

Im Verfahren nach dem Anspruch 2 wird der Auslösebefehl in der Form eines tonfrequenten Auslösesteuersignals mit einer anderen Frequenz als der des tonfrequenten Umschaltsteuersignals übertragen, wenn von der Bedienungsperson in der Notrufzentrale die Verbindung getrennt werden soll.

Im Verfahren nach dem Anspruch 3 wird im Notrufteilnehmergerät als Auslösebefehl das Ausbleiben von Umschaltsteuersignalen über Zeiträume ausgewertet, die länger sind als die für die Mitteilungen des Bedienungspersonals der Notrufzentrale an die hilfebedürftige Person vorgesehenen Zeiträume, z.B. 15 Sekunden. Das hat den Vorteil, dass dieses Verfahren weniger aufwendig ist als ein solches nach Anspruch 2. Um eine Auslösung bei längeren Mitteilungen oder Gesprächspausen zu verhindern, sendet die Notrufzentrale kurze Umschaltsteuersignale in ausreichend kurzen Zeitabständen.

Im Verfahren nach dem Anspruch 4 wird der Auslösebefehl durch eine schnelle Folge von kurzen Umschaltsteuersignalen, z.B. von 50 bis 200 ms Länge mit Abständen von 50 bis 200 ms während 2 bis 5 Sekunden übertragen. Das hat ebenfalls den Vorteil des geringen Aufwandes wie bei dem Verfahren nach Anspruch 3. Ein zusätzlicher Vorteil ist die schnellere Auslösung als bei dem Verfahren nach Anspruch 3.

Die Weiterbildung nach dem Anspruch 5 hat den Vorteil, dass die Verbindung auch ausgelöst wird, wenn die Übertragung des Auslösesteuersignals entsprechend dem Anspruch 2 bzw. der Umschaltsteuersignale entsprechend dem Anspruch 4 bzw. wegen einer Störung unterblieben ist.

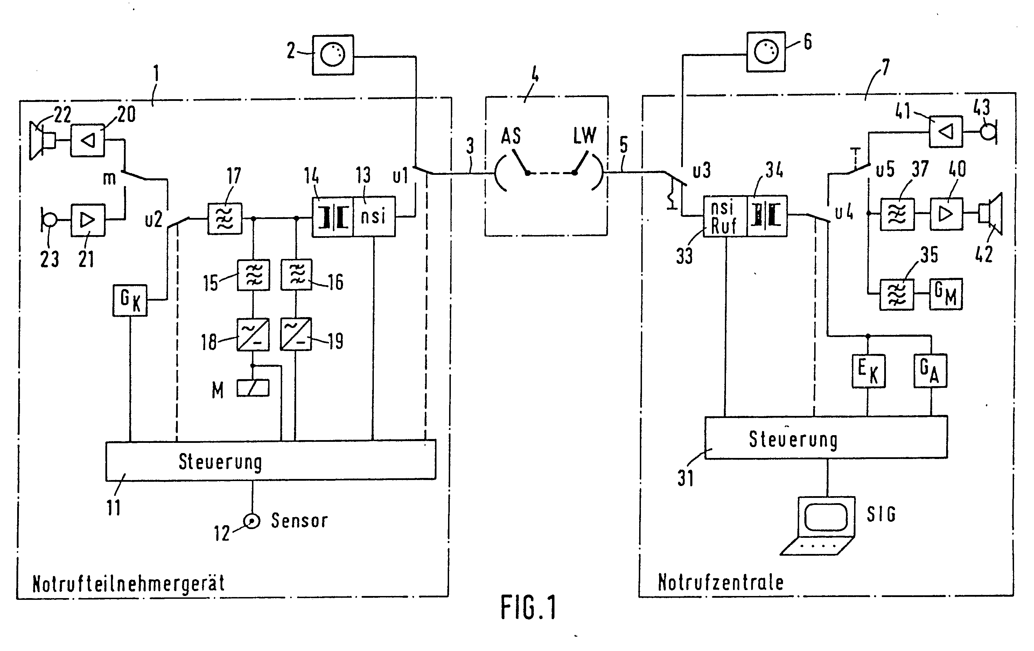

Als nächstes wird ein Beispiel für eine Schaltungsanordnung zur Durchführung des Verfahrens nach Anspruch 2 beschrieben. Die Schaltungsanordnung ist in der Figur 1 dargestellt und besteht aus mehreren Notrufteilnehmergeräten, die über Teilnehmerleitungen an ein Fernsprechwählvermittlungsnetz 4 angeschlossen sind. In der Figur 1 ist nur ein Notrufteilnehmergerät 1 und die zugehörige Teilnehmerleitung 3 gezeichnet. Über eine weitere Teilnehmerleitung 5 ist eine Notrufzentrale 7 an das Fernsprechwählvermittlungsnetz 4 angeschlossen. Von den Wählern, aus denen das Fernsprechwählvermittlungsnetz aufgebaut ist, sind nur ein Anrufsucher AS und ein Leitungswähler LW angedeutet.

Alle Schaltmittel sind in ihrem Ruhezustand gezeichnet.

Das Notrufteilnehmergerät 1 enthält folgende Baugruppen:

a) eine Steuerung 11, an der ein Sensor 12 angeschlossen ist,

b) eine Wechselsprecheinrichtung, bestehend aus einem Lautsprecherverstärker 20, einem Mikrofonverstärker 21, einem Lautsprecher 22, einem Mikrofon 23 und einem Relais (Wicklung M, Kontakt m) zur Sprechrichtungsumschaltung,

c) einen Kennungsgenerator $G_K$, der nach Wirksamschalten durch die Steuerung 11 eine für dieses Notrufteilnehmergerät festgelegte Tonfrequenz oder Tonfrequenzkombination abgibt,

d) einen Empfänger für tonfrequente Umschaltsteuersignale, bestehend aus einem für Umschaltsteuersignale durchlässigen ersten Bandpass 15 und einem diesem nachgeschalteten ersten Tonfrequenzempfänger 18, der an seinem mit der Steuerung 11 und der Relaiswicklung M verbundenen Ausgang bei Vorhandensein eines tonfrequenten Umschaltsteuersignals ein Gleichspannungssignal abgibt,

e) einen Empfänger für ein tonfrequentes Auslösesteuersignal, bestehend aus einem für das tonfrequente Auslösesteuersignal durchlässigen zweiten Bandpass 16 und einem diesem nachgeschalteten zweiten Tonfrequenzempfänger 19, der an seinem mit der Steuerung 11 verbundenen Ausgang bei Vorhandensein eines tonfrequenten Auslösesignals ein Gleichspannungssignal abgibt,

f) eine Bandsperre 17, die die tonfrequenten Umschalt- und Auslösesteuersignale sperrt,

g) eine Leitungsbaugruppe 13, deren Funktionen (Schliessen bzw. Öffnen der Teilnehmerschleife und Senden von Wahlimpulsen) von der Steuerung 11 steuerbar sind,

h) eine Übertragungsbaugruppe 14 zur galvanischen Trennung zwischen Teilnehmerleitung 3 und den Bandpässen 15 und 16 sowie der Bandsperre 17,

i) einen von der Steuerung 11 betätigbaren ersten Umschalter u1 zum Umschalten der Teilnehmerleitung 3 von einem Fernsprechapparat 2 auf die Leitungsbaugruppe 13,

k) einen von der Steuerung 11 betätigbaren zweiten Umschalter u2 zum Abschalten des Kennungsgenerators $G_K$ und Wirksamschalten der Wechselsprecheinrichtung.

Die Notrufzentrale 7 enthält folgende Baugruppen:

a) eine Steuerung 31 mit einem an ihr angeschlossenen Sichtgerät SIG,

b) eine Leitungsbaugruppe 33. Sie besteht aus:

   b1) einem Rufstromempfänger, der bei Erkennen des vom Leitungswähler LW ausgesandten Rufstromes ein entsprechendes Signal an die Steuerung 31 gibt,

   b2) Schaltmittel zum Schliessen bzw. Öffnen der Teilnehmerschleife und Senden von Wahlimpulsen, wobei diese Funktionen von der Steuerung 31 steuerbar sind,

c) einen von Hand betätigbaren Schalter u3, mit dem die Teilnehmerleitung 5 von der Leitungsbaugruppe 33 ab- und an einen Fernsprechapparat 6 anschaltbar ist,

d) eine Übertragerbaugruppe 34 zur galvanischen Trennung der Teilnehmerleitung 5 von den nachfolgend aufgeführten Baugruppen,

e) einen Kennungsempfänger $E_K$,

f) einen von der Steuerung 31 wirksam steuerbaren Generator $G_A$ für das Auslösesteuersignal,

g) einen Generator $G_M$ für das tonfrequente Umschaltsteuersignal,

h) eine Wechselsprecheinrichtung, bestehend aus einem Lautsprecherverstärker 40, einem Mikrofonverstärker 41, einem Lautsprecher 42, einem Mikrofon 43 und einer von Hand zu betätigenden Taste u5 zur Sprechrichtungsumkehr,

i) eine vor dem Eingang des Lautsprecherverstärkers 40 angeordnete, die Frequenz des tonfrequenten Umschaltsteuersignals sperrende Bandsperre 37,

k) einen von der Steuerung 31 betätigbaren vierten Umschalter u4 zum Abschalten des Kennungsempfängers $E_K$ sowie des Generators $G_A$ für das Auslösesteuersignal und Wirksamschalten der Wechselsprecheinrichtung.

Die von der Steuerung 11 bzw. 31 betätigbaren Umschalter u1, u2 und u4 sind als Relaiskontakte ausgeführt, wobei zu ihrer Betätigung die zugehörigen Wicklungen von der Steuerung 11 bzw. 31 erregbar sind.

Der Kennungsempfänger $E_K$ enthält entweder für jede der vorkommenden Tonfrequenzen ein eigenes fest abgestimmtes Filter oder ein einziges, über den in Frage kommenden Frequenzbereich durchstimmbares Filter. Im zweiten Fall ist die Verwendung eines durchstimmbaren n-Pfad-Filters vorteilhaft, da teure Spulen nicht benötigt werden. Der Kennungsempfänger $E_K$ gibt entsprechend der empfangenen Kennung ein Signal an die Steuerung 31, über die die Kennung auf dem Sichtgerät angezeigt wird.

Um ausreichend viele verschiedene Kennungen übertragen zu können, ist ein entsprechend dichtes Frequenzraster vorgesehen. Die langen Einschwingzeiten der dazu im Kennungsempfänger notwendigen Filter mit geringer Bandbreite stören nicht, da die Kennung als Dauersignal bis zum Erkennen in der Notrufzentrale gesendet wird.

Im Ruhezustand ist über den ersten Umschalter u1 des Notrufteilnehmergerätes 1 der Fernsprechapparat 2 über die Teilnehmerleitung 3 mit dem Fernsprechwählvermittlungssystem 4 verbunden, so dass von diesem Fernsprechapparat Gespräche geführt werden können wie von jedem anderen, an das Fernsprechvermittlungssystem 4 angeschlossenen Fernsprechapparat.

Im Notfall betätigt die hilfebedürftige Person den Sensor 12. Die Steuerung 11 schaltet daraufhin den ersten Umschalter u1 um, wodurch die Teilnehmerleitung 3 vom Fernsprechapparat 2 ab- und an die Leitungsbaugruppe 13 angeschaltet wird. Dann veranlasst die Steuerung 11 die Leitungsbaugruppe 13, die Teilnehmerschleife zu schliessen. Dadurch wird im Fernsprechwählvermittlungsnetz ein Anrufsucher und ein Gruppenwähler belegt. Anschliessend wählt die Leitungsbaugruppe 13 die Rufnummer der Notrufzentrale 7. Der dadurch von einem Leitungswähler des Fernsprechwählvermittlungsnetzes ausgesandte Rufstrom gelangt über die Teilnehmerleitung 5 und den dritten Umschalter u3 auf die Leitungsbaugruppe 33, die nach Erkennen des Rufstromes ein entsprechendes Signal an die Steuerung 31 gibt. Sie veranlasst, dass die Leitungsbaugruppe 33 die Teilnehmerschleife schliesst, wodurch im Leitungswähler der Rufstrom abgeschaltet und die Verbindung zwischen dem Notrufteilnehmergerät und der Notrufzentrale durchgeschaltet wird.

Der Kennungsgenerator $G_K$ wird von der Steuerung 11 wirksam geschaltet und das von ihm als Kennung abgegebene Tonfrequenzsignal gelangt über den zweiten Umschalter u2, der Bandsperre 17, der Übertragerbaugruppe 14, der Leitungsbaugruppe 13, dem ersten Umschalter u1, der Teilnehmerleitung 3, dem Fernsprechwählvermittlungsnetz 4, der Teilnehmerleitung 5, dem dritten Umschalter u3, der Leitungsbaugruppe 33, der Übertragerbaugruppe 34 und dem vierten Umschalter u4 in den Kennungsempfänger $E_K$.

Nach Anzeige der Kennung auf dem Sichtgerät SIG betätigt die Bedienungsperson in der Notrufzentrale eine Quittungstaste am Sichtgerät. Dadurch wird von der Steuerung 31 der vierte Umschalter u4 in Arbeitsstellung versetzt und so die Wechselsprecheinrichtung eingeschaltet. Ferner drückt die Bedienungsperson die Taste u5. So wird die Wechselsprecheinrichtung der Notrufzentrale auf «Hören» geschaltet und der Generator $G_M$ für das tonfrequente Umschaltsteuersignal eingeschaltet. Dieses gelangt über den Bandpass 35, die Taste u5, den vierten Umschalter u4, die Übertragerbaugruppe 34, die Leitungsbaugruppe 33, den dritten Umschalter u3, die Teilnehmerleitung 5, das Fernsprechwählvermittlungsnetz 4, die Teilnehmerleitung 3, den ersten Umschalter u1, die Leitungsbaugruppe 13, die Übertragerbaugruppe 14, den Bandpass 15 auf den ersten Tonfrequenzempfänger 18. Das von ihm abgegebene Gleichspannungssignal führt zur Betätigung des Relais M, wodurch die Wechselsprecheinrichtung des Notrufteilnehmergerätes 1 auf «Sprechen» geschaltet wird. Das Gleichspannungssignal verursacht ferner, dass die Steuerung 11 den zweiten Umschalter u2 in die Arbeitsstellung versetzt und damit die Wechselsprecheinrichtung wirksam schaltet.

Die hilfebedürftige Person hat so die Möglichkeit, zu der Bedienungsperson in der Notrufzentrale zu sprechen. Damit das Gespräch nicht durch das tonfrequente Umschaltsteuersignal gestört wird, ist vor dem Lautsprecherverstärker 40 eine die Frequenz des tonfrequenten Umschaltsteuersignals sperrende Bandsperre 37 vorgesehen.

Will die Bedienungsperson zu der hilfebedürftigen Person sprechen, so lässt sie die Taste u5 los. Dadurch wird der Generator $G_M$ für das Umschaltsteuersignal abgeschaltet und die Wechselsprecheinrichtung der Notrufzentrale 7 auf «Sprechen» geschaltet. Im Notrufteilnehmergerät 1 nimmt das Relais M wieder die Ruhelage ein, wodurch die dortige Wechselsprecheinrichtung auf «Hören» geschaltet wird. Der zweite Umschalter u2 bleibt weiter in Arbeitsstellung.

Solche Sprecheinrichtungsumschaltungen durch Drücken bzw. Loslassen der Taste u5 sind beliebig oft möglich.

Ist die Bedienungsperson ausreichend über den Notfall informiert, drückt sie zwecks Übertragung eines Auslösebefehls an das Notrufteilnehmergerät am Sichtgerät SIG eine Auslösetaste. Dadurch wird die Steuerung 31 veranlasst, den vierten Umschalter u4 wieder in die Ruhestellung zu versetzen und den Generator $G_A$ für das tonfrequente Auslösesteuersignal wirksam zu schalten. Das Auslösesteuersignal gelangt über den vierten Umschalter u4, die Übertragerbaugruppe 34, die Leitungsbaugruppe 33, den dritten Umschalter u3, die Teilnehmerleitung 5, das Fernsprechwählvermittlungsnetz 4, die Teilnehmerleitung 3, den ersten Umschalter u1, die Leitungsbaugruppe 13, die Übertragerbaugruppe 14, den Bandpass 16 in den Tonfrequenzempfänger 19. Das von ihm abgegebene Gleichstromsignal versetzt die Steuerung 11 wieder in den Ruhezustand, d.h. der zweite Umschalter u2 wird wieder in die Ruhestellung geschaltet und die Leitungsbaugruppe 13 öffnet die Teilnehmerschleife. Dadurch wird die Fernsprechverbindung im Fernsprechwählvermittlungsnetz ausgelöst, d.h. getrennt.

Die Steuerung 31 veranlasst ausserdem, dass die Leitungsbaugruppe 33 ebenfalls die Teilnehmerschleife öffnet, wodurch die Teilnehmerleitung 5 wieder frei wird.

Mit dem dritten Umschalter u3 kann bei einer Störung in der Notrufzentrale 7 die Teilnehmerleitung 5 von der Notrufzentrale 7 ab- und an den Fernsprechapparat 6 angeschaltet werden, so dass mit dem Fernsprechapparat 6 noch ein Notbetrieb möglich ist.

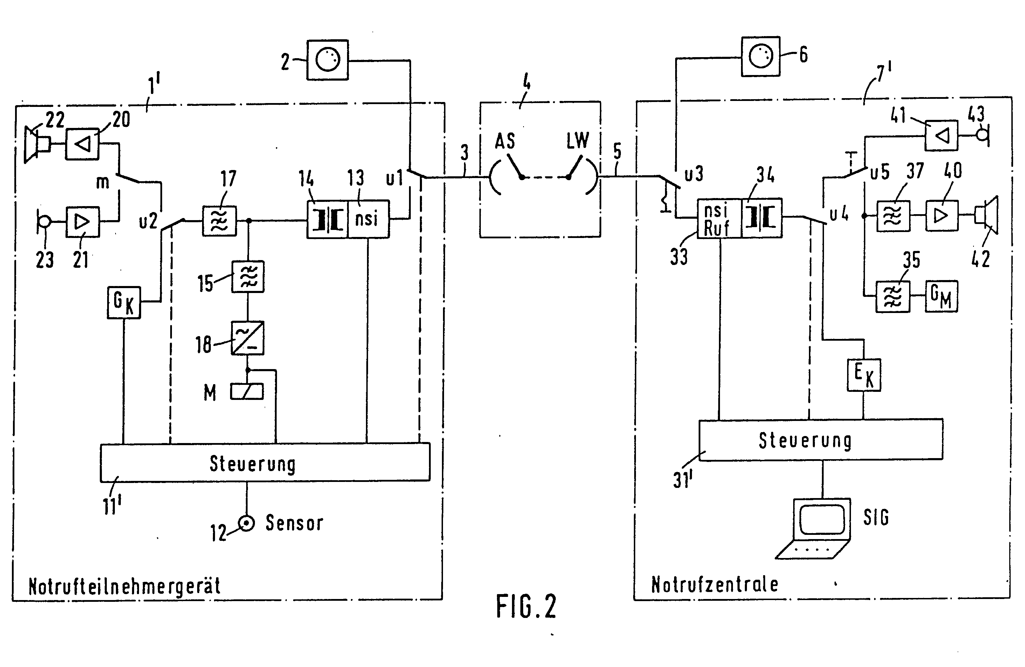

Eine Schaltungsanordnung zur Durchführung des Verfahrens nach dem Patentanspruch 3 wird anhand der Figur 2 beschrieben. Der Unterschied gegenüber der Schaltungsanordnung nach der Figur 1 besteht darin, dass im Notrufteilnehmergerät 1' kein Empfänger und in der Notrufzentrale 7' kein Generator für ein Auslösesteuersignal vorgesehen ist. Die Funktionen von der Betätigung des Sensors 12 bis einschliesslich des Wirksamschaltens und des Sprechrichtungsumschaltens der Wechselsprecheinrichtungen sind die gleichen wie bei der Schaltungsanordnung nach der Figur 1. Jedoch wird der Auslösebefehl in der Weise übertragen, dass während eines längeren Zeitraumes kein Umschaltsteuersignal übertragen wird.

In der Steuerung 11' ist ein Zeitglied vorgesehen, das mit den Ausgangssignalen des Empfängers für die tonfrequenten Umschaltsteuersignale 15, 18 beaufschlagt wird. Trifft in einem Zeitraum von 15 Sekunden nach einem Umschaltsteuersignal kein weiteres ein, so wird von dem Zeitglied die Steuerung 11' in den Ruhezustand versetzt und die Fernsprechverbindung ausgelöst. Durch Betätigen einer Auslösetaste am Sichtgerät SIG wird auch die Teilnehmerleitung 5 wieder frei.

Ein Zeitraumm von 15 Sekunden wurde gewählt, weil eine ununterbrochene Mitteilung des Bedienungspersonals an die hilfebedürftige Person selten länger als 15 Sekunden dauert, also Umschaltsteuersignale üblicherweise in kürzeren Abständen als 15 Sekunden auftreten. Spricht die Bedienungsperson doch länger als 15 Sekunden, so muss sie in Abständen die kürzer als 15 Sekunden sind, die Taste u5 kurzzeitig betätigen und damit Umschaltsteuersignale aussenden. Das gleiche gilt für längere Gesprächspausen.

Eine Schaltungsanordnung zur Durchführung des Verfahrens nach dem Patentanspruch 4 wird ebenfalls anhand der Figur 2 beschrieben. Die Steuerung 11' enthält Zeitglieder, die die Längen von Umschaltsteuersignalen und ihre Abstände sowie die Dauer dieser dichten Folge bewertet. Liegen ihre Längen und Abstände zwischen 50 ms und 200 ms und dauert diese Folge 2 bis 5 Sekunden lang an, so wird dies als Auslösebefehl ausgewertet, d.h. die Steuerung 11' in den Ruhezustand versetzt und die Fernsprechverbindung ausgelöst.

Bei einer Schaltungsanordnung zur Durchführung des Verfahrens nach dem Patentanspruch 5 enthält die Steuerung 11 bzw. 11' zusätzlich ein Zeitglied, das 15 Sekunden nach dem letzten Umschaltsteuersignal die Steuerung 11 bzw. 11' in den Ruhezustand versetzt. Dadurch wird wie bei einer Schaltungsanordnung zur Durchführung des Verfahrens nach dem Patentanspruch 3 die Fernsprechverbindung ausgelöst.

## Patentansprüche

1. Verfahren zur Übermittlung von Notrufen von hilfebedürftigen Personen, bei dem nach Betätigung eines Sensors ein an eine Teilnehmerleitung eines Fernsprechwählvermittlungsnetzes angeschlossenes Notrufteilnehmergerät selbsttätig die Rufnummer einer an das Fernsprechwählvermittlungsnetz angeschlossenen Notrufzentrale wählt und nach dem so bewirkten Aufbau einer Fernsprechverbindung eine Kennung abgibt, und anschliessend durch ein Steuersignal der Notrufzentrale im Notrufteilnehmergerät eine Wechselsprecheinrichtung wirksam geschaltet wird, wobei ihre Sprechrichtung durch von der Notrufzentrale gesendete tonfrequente Umschaltsteuersignale umgeschaltet werden kann, dadurch gekennzeichnet, dass die Kennung als Dauersignal mit von Notrufteilnehmergerät zu Notrufteilnehmergerät unterschiedlicher Tonfrequenz oder Tonfrequenzkombination bis zum Wirksamschalten der Wechselsprecheinrichtung gesendet wird, dass die Wechselsprecheinrichtung durch das erstmals gesendete Umschaltsteuersignal wirksam geschaltet wird, dass die Wechselsprecheinrichtung während des Empfanges des Umschaltsteuersignals auf eine der möglichen Sprechrichtungen und während des Nichtempfanges auf die andere Sprechrichtung geschaltet ist, wobei eine feste Zuordnung vorgegeben ist, und dass die Auslösung der Fernsprechverbindung durch einen von der Notrufzentrale an das Notrufteilnehmergerät übertragenen Auslösebefehl bewirkt wird, wobei durch diesen das Notrufteilnehmergerät in den Ruhezustand versetzt wird.

2. Verfahren nach Anspruch 1, dadurch gekennzeichnet, dass als Auslösebefehl ein tonfrequentes Auslösesteuersignal übertragen wird.

3. Verfahren nach Anspruch 1, dadurch gekennzeichnet, dass als Auslösebefehl das Ausbleiben von Umschaltsteuersignalen über Zeiträume ausgewertet wird, die länger sind als die Zeiträume, die für die Mitteilungen des Bedienungspersonals der Notrufzentrale an die hilfebedürftige Person vorgesehen sind.

4. Verfahren nach Anspruch 1, dadurch gekennzeichnet, dass als Auslösebefehl 2 bis 5 Sekunden lang Umschaltsteuersignale von 50 bis 200 ms Länge mit Abständen von 50 bis 200 ms übertragen werden.

5. Verfahren nach den Ansprüchen 2 oder 4, dadurch gekennzeichnet, dass als weiterer Auslösebefehl das Ausbleiben von Umschaltsteuersignalen über Zeiträume ausgewertet wird, die länger sind als die Zeiträume, die für die Mitteilungen des Bedienungspersonals der Notrufzentrale an die hilfebedürftige Person vorgesehen sind.

## Claims

1. Method for the forwarding of emergency calls from persons requiring assistance, in wich method an emergency call subscriber set, which is connected to a subscriber line of an automatic telephone exchange network, after actuation of a sensor automatically selects the call number of an emergency call exchange connected to the automatic telephone exchange network and after the thus effected build-up of a telephone connection gives out an identification and an alternate speech direction equipment in the emergency call subscriber set is subsequently switched to become effective through a control signal of the emergency call exchange, wherein its speech direction can be switched over through tone frequency switch-over control signals sent from the emergency call exchange, characterised thereby, that the identification is sent as continuous signal with the tone frequency or tone frequency combination differing from emergency call subscriber set to emergency call subscriber set until the alternate speech direction equipment is switched to become effective, that the alternate speech direction equipment is switched to become effective through the switch-over control signal first sent, that the alternate speech direction equipment is switched during the reception of the switch-over control signal to one of the possible speech directions and during the non-reception to the other speech direction, wherein a fixed association is predetermined, and that the release of the telephone connection is effected through a release command transmitted from the emergency call exchange to the emergency call subscriber set, wherein the emergency call subscriber set is set into the rest state through this release command.

2. Method according to claim 1, characterised thereby, that a tone frequency release control signal is transmitted as release command.

3. Method according to claim 1, characterised thereby, that the absence of switch-over control signals over time spans, which are longer than the time spans which are provided for the communications of the operating personnel of the emergency call exchange to the person requiring assistance, is evaluated as release command.

4. Method according to claim 1, characterised thereby, that switch-over control signals having a length of 50 to 200 milliseconds and spacings of 50 to 200 milliseconds are transmitted for 2 to 5 seconds as release command.

5. Method according to the claims 2 or 4, characterised thereby, that the absence of switch-over control signals over time spans, which are longer than the time spans which are provided for the communications of the operating personnel of the emergency call exchange to the person requiring assistance, is evaluated as further release command.

**Revendications**

1. Procédé pour transmettre des demandes de secours de personnes en détresse ayant besoin d'aide, selon lequel, à la suite de l'actionnement d'un élément d'appel, un poste d'appel d'urgence, installé chez un abonné et branché sur une ligne d'abonné d'un réseau téléphonique à commutation automatique, fait automatiquement le numéro d'appel d'une centrale d'appel d'urgence raccordée au réseau téléphonique et, après l'établissement ainsi produit d'une liaison téléphonique, délivre un signal d'identité, et selon lequel un signal de commande de la centrale d'appel d'urgence enclenche ensuite un dispositif d'interphone, dont le sens de transmission de la parole peut être inversé par des signaux de commande d'inversion à fréquence vocale envoyés par la centrale d'appel d'urgence, caractérisé en ce que le signal d'identité est émis sous forme d'un signal continu, avec une fréquence vocale ou une combinaison de fréquences vocales qui diffère d'un poste d'appel d'urgence à l'autre, jusqu'à l'enclenchement du dispositif d'interphone, que le dispositif d'interphone est enclenché ou rendu actif par le premier envoi du signal de commande d'inversion, que le dispositif d'interphone est commuté pendant la réception du signal de commande d'inversion sur l'un des sens de transmission de la parole possibles et est commuté pendant la non-réception de ce signal sur l'autre sens de transmission de la parole, selon une corrélation fixe, et que la déconnexion de la liaison téléphonique est produite par un ordre de déconnexion qui est envoyé de la centrale d'appel d'urgence au poste d'appel d'urgence de l'abonné et qui fait passer ce poste à l'état de repos.

2. Procédé selon la revendication 1, caractérisé en ce que l'ordre de déconnexion est transmis sous forme d'un signal de commande de déconnexion à fréquence vocale.

3. Procédé selon la revendication 1, caractérisé en ce que l'absence de signaux de commande d'inversion pendant certaines durées est exploitée comme un ordre de déconnexion, les durées étant plus longues que celles prévues pour les informations à transmettre par le personnel de la centrale d'appel d'urgence à la personne en détresse.

4. Procédé selon la revendication 1, caractérisé en ce que l'ordre de déconnexion est transmis sous forme de la transmission, pendant 2 à 5 secondes, de signaux de commmande d'inversion d'une durée de 50 à 200 ms et avec des intervalles de 50 à 200 ms.

5. Procédé selon la revendication 2 ou 4, caractérisé en ce que l'absence de signaux de commande d'inversion pendant certaines durées est exploitée comme un ordre de déconnexion supplémentaire, les durées étant plus longues que celles prévues pour la transmission d'informations du personnel de la centrale d'appel d'urgence à la personne en détresse.

FIG.1

FIG.2